Europäisches Patentamt

European Patent Office

Office européen des brevets

(11) Veröffentlichungsnummer: **0 263 233**
**A2**

## (12) EUROPÄISCHE PATENTANMELDUNG

(21) Anmeldenummer: 87104710.6

(22) Anmeldetag: 31.03.87

(51) Int. Cl.⁴ **G01D 18/00**

(30) Priorität: 04.10.86 DE 3633939

(43) Veröffentlichungstag der Anmeldung:
**13.04.88 Patentblatt 88/15**

(84) Benannte Vertragsstaaten:
**DE FR GB IT NL SE**

(71) Anmelder: **W.C. Heraeus GmbH**
**Heraeusstrasse 12 - 14**
**D-6450 Hanau / Main(DE)**

(72) Erfinder: **Ziegler, Horst, Prof. Dr.**
**Steinhauser Weg 13**
**D-4790 Paderborn(DE)**
Erfinder: **Brendecke, Hermann, Dr.**
**Goethestrasse 60**
**D-8752 Kleinostheim(DE)**
Erfinder: **Hauptmann, Veit**
**Gutenbergallee 60**
**D-6451 Grosskrotzenburg(DE)**

(74) Vertreter: **Heinen, Gerhard, Dr.**
**W.C. Heraeus GmbH Zentralbereich Patente**
**und Lizenzen Heraeusstrasse 12-14**
**D-6450 Hanau(DE)**

(54) **Übertragung von Signalen aus einer Sensoreinheit.**

(57) Die Erfindung beschreibt ein Übertragungs-und Testverfahren für Sensorelemente mit frequenzabhängigen Sensoren und impulsabstandskodierter Meßwertübertragung. Durch optische Signalübertragung, insbesondere über Infrarot-Leuchtdioden lassen sich berührungslose Testmöglichkeiten und eine potentialfreie Meßwertübertragung realisieren.

Hauptanwendung ist Temperaturmeßtechnik mit Quarzfrequenzsensoren.

EP 0 263 233 A2

## "Übertragung von Signalen aus einer Sensoreinheit"

Die Erfindung betrifft ein Verfahren zur Übertragung von Signalen, die in einer Sensoreinheit, insbesondere Temperatursensor, als Folge von elektrischen Impulsen erzeugt werden und deren zeitlicher Abstand eine Funktion der Meßgröße ist sowie eine Schaltungsanordnung zur Durchführung des Verfahrens.

Aus der DE-PS 31 28 706 ist eine Fühleinheit zur Verwendung bei der Fernmessung von Wärmeverbrauchern bekannt, bei der ein Temperaturfühler ein der Temperatur an der Verbrauchsstelle entsprechendes frequenzmoduliertes Meßsignal bereitstellt, das aus einer abstandsmodulierten Aufeinanderfolge von Impulsen besteht; die Übertragung zur Auswerteeinheit erfolgt über Leitungen.

Es ist zwar möglich, nach der DE-PS eine Vielzahl von Verbrauchern einer zentralen Auswerteeinheit zuzuführen, doch ist dies stets nur über elektrische Leitungen möglich, die bekannterweise auch äußeren Störeinflüssen unterliegen können. Darüberhinaus können sich insbesondere bei größeren Anlagen unübersichtliche Zuordnungen von Temperaturfühlern, Leitungen und Auswerteeinheiten ergeben.

Die Erfindung stellt sich die Aufgabe, ausgehend von der eingangs beschriebenen Temperaturfühlereinrichtung die elektrischen Impulse mittels Lichtgenerator in optische Signale umzusetzen, die auf ein mit Photodetektor versehenes Meßgerät einwirken, welches die zeitlichen Abstände der optischen Signale auswertet. Dabei soll sowohl eine direkte Bestrahlung des Meßgerätes durch den Lichtgenerator als auch eine Übertragung der optischen Signale durch Lichtwellenleiter möglich sein.

Die Aufgabe wird dadurch gelöst, daß die Impulse durch einen mit der Sensoreinheit verbundenen Lichtgenerator in Lichtimpulse umgewandelt werden, deren zeitliche Abstände mitels eines mit einem Photodetektor verbundenen Zeitzählers auswertbar sind.

In einer erfindungsgemäßen Schaltungsanordnung enthält der Sensor einen elektrischen Schwingkreis mit einem die Frequenz bestimmenden Sensorelement, dessen Frequenz eine Funktion der Meßgröße ist; der Ausgang des Sensorelements ist mit dem Eingang eines Impulsgenerators verbunden, an dessen Ausgang ein Lichtgenerator angeschlossen ist. In einer bevorzugten Ausführungsform ist dem Impulsgenerator ein Frequenzteiler vorgeschaltet. Weitere vorteilhafte Ausgestaltungen des Gegenstandes der Erfindung sind in den Unteransprüchen angegeben.

Als vorteilhaft erweist sich nach der Erfindung, daß bei Störungen in einem Sensor-und Auswertesystem die Sensorfunktion durch einfache Bestrahlung des Meßgerätes als Auswerteinheit direkt am Sensor überprüft werden, wobei auf irgendwelche Demontagearbeiten mit eventueller Unterbrechung der Signalleitungen verzichtet werden kann. Gegebenenfalls weist das Meßgerät eine Kontrolleuchte auf, die die empfangenen Lichtimpulse dem Bedienungspersonal sichtbar macht. Bei Lichtimpulsen des Lichtgenerators im sichtbaren Spektrum ist eine ständige Sichtkontrolle ohne Meßgeräte möglich. Weiterhin kann beim Einsatz von Lichtwellenleitern eine störungsfreie Signalübertragung erzielt werden, die praktisch keine besonderen Sicherheitsmaßnahmen mehr erfordert.

Im folgenden ist der Gegenstand der Erfindung anhand der Figuren 1 bis 3 näher erläutert.

Figur 1a zeigt die prinzipielle Zuordnung von Sensor, Impulsgenerator, Lichtgenerator und Auswerteeinheit, wobei in

Figur 1b die zugehörige Impulsfolge dargestellt ist;

Figur 2 zeigt im Blockschaltbild die erfindungsgemäße Schaltungsanordnung;

Figur 3 zeigt die elektrische Schaltung zur Erzeugung von Lichtimpulsen.

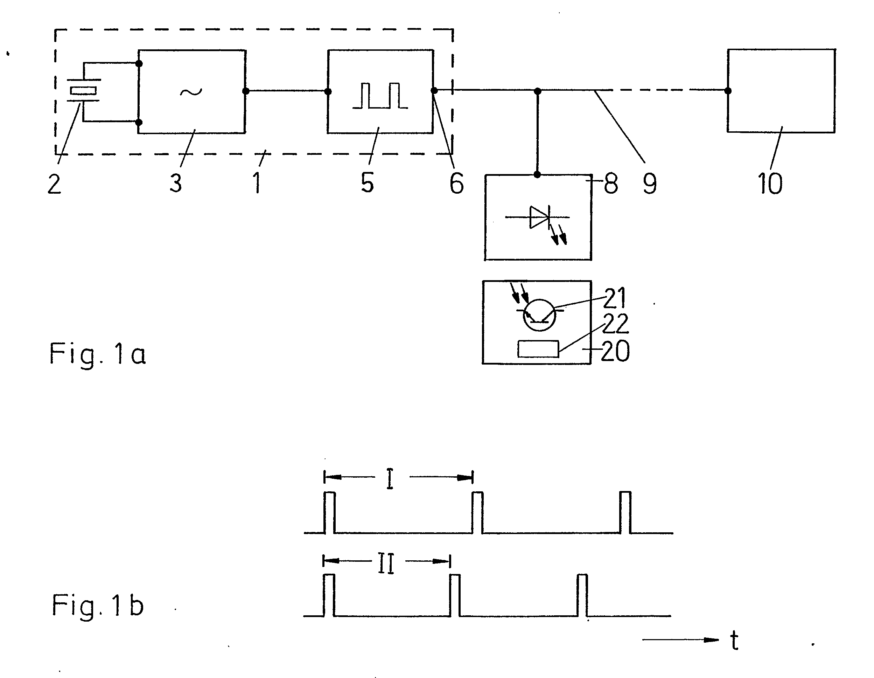

Gemäß Figur 1a besteht die Sensor-Einheit 1 aus dem eigentlichen Sensorelement 2, das Teil eines Oszillators 3 ist, einem Frequentzteiler 4 und einem nachgeschalteten Impulsgenerator 5; an den Ausgang 6 des Impulsgenerators ist ein Lichtgenerator 8 angeschlossen, welcher die vom Impulsgenerator 5 erzeugten elektrischen Impulse in Lichtimpulse umwandelt; im Strahlungsbereich des Lichtgenerators 8 befindet sich eine Auswerteeinheit 20, die über einen Photodetektor 21 die Lichtimpulse empfängt, wobei deren zeitliche Abstände durch einen Zeitzähler 22 ermittelt werden.

Da das Sensorelement 2 die Frequenz des Oszillators 3 direkt beeinflußt, sind auch die über Frequenzteiler und Impulsgenerator 5 erzeugten Impulse ein Maß für den Wert des vom Sensorelement 2 aufgenommenen Meßsignals.

Weiterhin ist der Ausgang 6 des Impulsgenerators 5 über eine elektrische Leitung 9 mit einer stationären Auswerteeinheit 10 verbunden. Es ist jedoch auch möglich, an Stelle der elektrischen Leitung 9 einen vom Lichtgenerator gespeisten Lichtwellenleiter einzusetzen, der die Lichtsignale an die stationäre Auswerteeinheit überträgt; in diesem Falle müßte die Auswerteeinheit mit einem Photodetektor zur Aufnahme der Signale versehen sein.

Da als Hauptanwendungsgebiet der Erfindung die Temperaturmessung in Betracht kommt, kann das Sensorelement 2 aus einem Schwingquarz bestehen, welcher das frequenzbestimmende Element des Oszillatorkreises ist. Es ist jedoch auch möglich, LC-Oszillatoren, bei denen die Induktivität L oder die Kapazität C von anderen Meßgrößen als der Temperatur beeinflußt werden einzusetzen; solche LC-Oszillatoren können beispielsweise zur Messung der Feuchtigkeit oder des Drucks dienen; bei der Messung der Feuchtigkeit ist ebenfalls der Einsatz eines piezoelektrischen Elements möglich.

Figur 1b zeigt den schematischen Zusammenhang zwischen der aufgenommenen Meßgröße (Temperatur) und der abgegebenen Impulsfolge (Zeitabstandsmodulation): in diesem Ausführungsbeispiel beträgt beispielsweise bei einer Temperatur von 0 °C der Impulsabstand 0,500 sec.(obere Kurve I), bei 100 °C 0,495 sec. (untere Kurve II).

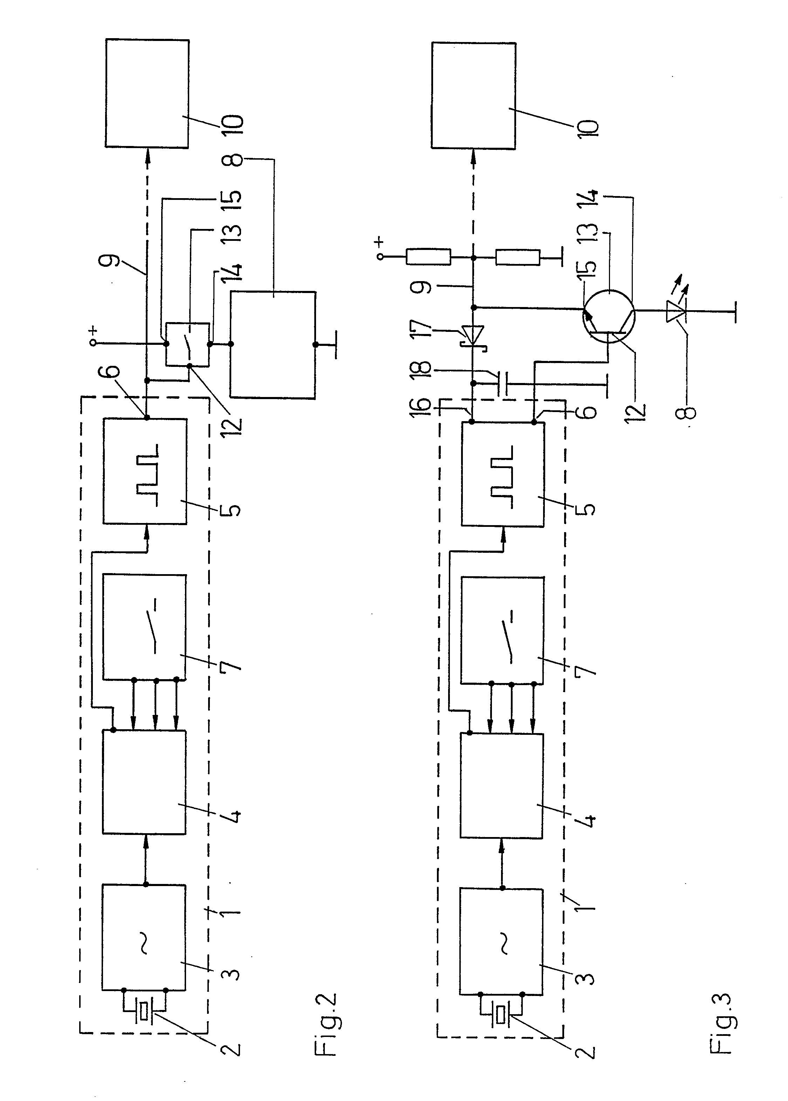

Gemäß Figur 2 bildet der Oszillator 3 mit seinem Sensorelement 2 das frequenzbestimmende Teil; est ist möglich Quarzoszillatoren mit LC-Schwingkreis, wie z.B. Hartley-Oszillatoren und ohne LC-Schwingkreis einzusetzen; als besonderes geeignet haben sich Quarzoszillatoren ohne LC-Schwingkreis erwiesen. Der Ausgang des Oszillators 3 ist mit dem Eingang des Frequenzteilers 4 verbunden, dessen Teilerverhältnis zur Korrektur der Schwingquarztoleranz mittels einer Schalteranordnung einstellbar ist. Der Ausgang des Frequenzteilers 4 ist mit dem Eingang des Impulsgenerators 5 verbunden, dessen Ausgang 6 Impulse konstanter Impulsbreite erzeugt, wobei deren zeitlicher Abstand von der Meßgröße abhängig ist.

Der Ausgang 6 des Impulsgenerators 5 ist an den Steuereingang 12 eines elektronischen Schaltelements 13 angeschlossen, dessen Anschlüsse 14 und 15 die eigentliche Schaltstrecke bilden; in der Praxis haben sich als Schaltelemente insbesondere Schalttransistoren bewährt, wobei in diesem Fall Steuereingang 12 die Basis ist, während die Schaltstrecke der Anschlüsse 14, 15 die Kollektor-Ermitter-Strecke bildet. In Reihe zum elektronischen Schaltelement 13 ist der Lichtgenerator 8 geschaltet, der vorzugsweise aus einer Lumineszenzdiode, besteht. Die Stromversorgung ist symbolisch durch das + -Zeichen dargestellt.

Parallel zur Ansteuerungsleitung des elektronischen Schaltelements 13 verläuft die elektrische Leitung, die zur stationären Auswerteeinheit 10 führt. Die Auswerteeinheit 10 dient üblicherweise gleichzeitig zur Stromversorgung der Sensoreinheit 1; es ist selbstverständlich auch möglich, die Sensoreinheit durch eine Batterie potentialfrei elektrisch zu versorgen. Es ist selbstverständlich möglich, die zur stationären Auswerteeinheit führenden Impulse ebenfalls über ein elektronisches Schaltelement bzw. das vorhandene Schaltelement 13 zu verstärken.

Figur 3 zeigt eine elektrische Schaltungsanordnung mit den bereits anhand der figur 2 erläuterten Schaltungselementen.

Impulsgenerator 5 ist über seinen Ausgang 6 mit der Basis des als elektronisches Schaltelement 13 dienenden Transistors verbunden, in dessen Kollektor-Emitter-Strecke die als Lichtgenerator 8 dienende Lumineszenzdiode geschaltet ist. Der Stromversorgungsanschluß 16 des Impulsgenerators 5 einschließlich der gesamten Sensoreinheit 1 ist über eine Diode 17 mit dem Emitter des Transistors sowie der mit dem + Zeichen dargestellten Stromversorgung verbunden. In diesem Fall ist die elektrische Leitung 9 zur Übertragung der Impulse mit der Stromversorgungsleitung identisch. Als Pufferung der Stromversorgung des Impulsgenerators 5 bei der Abgabe von Signalen ist ein Stützkondensator 18 vorgesehen.

## Ansprüche

1. Verfahren zur Übertragung von Signalen, die in einer Sensoreinheit, insbesondere Temperatursensor, als Folge von elektrischen Impulsen erzeugt werden und deren zeitlicher Abstend eine Funktion der Meßgröße ist, dadurch gekennzeichnet, daß die Impulse durch einen mit der Sensoreinheit (1) verbundenen Lichtgenerator (8) in Lichtimpulse umgewandelt werden, deren zeitliche Abstände mittels eines mit einem Photodetektor (21) verbundenen Zeitzählers (22) auswertbar sind.

2. Verfahren nach Anspruch 1, dedurch gekennzeichnet, daß der Lichtgenerator (8) Infrarot-Licht erzeugt.

3. Verfahren nach Anspruch 1 oder 2, dadurch gekennzeichnet, daß die Lichtimpulse durch einen Lichtwellenleiter übertragen werden.

4. Verfahren nach einem der Ansprüche 1 bis 3, dadurch gekennzeichnet, daß die von der Meßgröße abhängige Änderung der zeitlichen Impulsabstände bis zu 10 % der Impulsabstände beträgt.

5. Schaltungsanordnung zur Durchführung des Verfahrens nach Anspruch 1, dadurch gekennzeichnet, daß die Sensoreinheit (1) einen elektrischen Oszillator (3) mit einem Sensorelement (2) enthält, dessen Frequenz eine Funktion der Meßgröße ist, daß der Ausgang des Oszillators (3) mit dem Eingang eines Impulsgenerators (5) verbunden ist, an dessen Ausgang ein Lichtgenerator (8) angeschlossen ist.

6. Schaltungsanordnung nach Anspruch 5, dadurch gekennzeichnet, daß der Eingang des Impulsgenerators (5) mit einen vom Oszillator (3) gespeisten Frequenzteiler (4) verbunden ist.

7. Schaltungsanordnung nach Anspruch 6, dadurch gekennzeichnet, daß der Frequenzteiler (4) zur Korrektur von Toleranzen der Grundschwingung des Sensorelements (2) eine Schalteranordnung (7) zur Einstellung des Teilungsfaktors aufweist.

8. Schaltungsanordnung nach einem oder mehreren der Ansprüche 5 bis 7, dadurch gekennzeichnet, daß als Sensorelement (2) ein piezoelektrisches Element eingesetzt ist.

9. Schaltungsanordnung nach Anspruch 8, dadurch gekennzeichnet, daß als Sensorelement (2) eine Schwingquarz eingesetzt ist.

10. Schaltungsanordnung nach einem oder mehreren der Ansprüche 5 bis 10, dadurch gekennzeichnet, daß der Ausgang (6) des Impulsgenerators (5) mit dem Steuereingang (12) eines elektronischen Schaltelements (13) verbunden ist, dessen Schaltstrecke (14,15) in Reihe mit dem Lichtgenerator (8) geschaltet ist.

11. Schaltungsanordnung nach Anspruch 10, dadurch gekennzeichnet, daß als Lichtgenerator (8) eine Lumineszenzdiode vorgesehen ist.

12. Schaltungsanordnung nach Anspruch 10, dadurch gekennzeichnet, daß als Lichtgenerator (8) eine Laserdiode vorgesehen ist.

Fig. 1a

Fig. 1b

Fig.2

Fig.3